# EUROPÄISCHE PATENTSCHRIFT

(11) **EP 3 070 210 B1**
(45) Veröffentlichungstag und Bekanntmachung des Hinweises auf die Patenterteilung: **26.08.2020**
(21) Anmeldenummer: 16000559.1
(22) Anmeldetag: 08.03.2016
(51) Int. Cl.: E03C 1/04

(54) **ARMATURENKÖRPER FÜR EINE SANITÄRARMATUR UND HERSTELLUNGSVERFAHREN**
FITTING BODY FOR A SANITARY FITTING AND METHOD OF MANUFACTURING
CORPS DE ROBINETTERIE POUR UNE ARMATURE SANITAIRE ET PROCEDE DE FABRICATION

(30) Priorität: 09.03.2015 DE 102015002894
(43) Veröffentlichungstag der Anmeldung: 21.09.2016
(73) Patentinhaber: Grohe AG, 58675 Hemer (DE)
(72) Erfinder: Loi, Thomas, 58511 Lüdenscheid (DE); Theyson, Pia, 58675 Hemer (DE); Philipps-Liebich, Hartwig, 58706 Menden (DE)

(56) Entgegenhaltungen:
- US-A- 4 649 958
- US-A- 5 579 823
- US-A1- 2006 059 686
- US-A1- 2014 338 777

## Beschreibung

Die vorliegende Erfindung betrifft einen Armaturenkörper für eine Sanitärarmatur und ein Verfahren zur Herstellung eines Armaturenkörpers für eine Sanitärarmatur. Der Armaturenkörper ist insbesondere ein Teil bzw. ein Bauteil einer Sanitärarmatur.

Bei Sanitärarmaturen handelt es sich insbesondere um Thermostatarmaturen und/oder Mischarmaturen, insbesondere um Thermostatmischarmaturen, für Badewannen, Wandbecken, Handbrausen oder dergleichen. Hierzu weisen die Sanitärarmaturen regelmäßig einen Warmwasserzulauf für Warmwasser und einen Kaltwasserzulauf für Kaltwasser auf. Zudem weisen die Sanitärarmaturen regelmäßige eine Auslassöffnung für Mischwasser auf. Das Warmwasser und das Kaltwasser können innerhalb der Sanitärarmatur mittels eines Thermostatventils gemischt werden, um eine vorgebbare Wassertemperatur zu erreichen. Zudem kann der Wasserdurchfluss bzw. die Wassermenge mittels eines Mengenregulierventils eingestellt werden. Die Ventile können mittels separater Stellglieder oder mittels eines gemeinsamen Stellglieds betätigt werden.

Es sind Wasserarmaturen bekannt, bei denen die Wasserkanäle bzw. die Wasserwege in einem Grundkörper geformt sind. Ein solcher Grundkörper ist beispielsweise aus Metall, Kunststoff oder dergleichen gebildet. Bei einem solchen Grundkörper werden die Wasserkanäle während des Herstellungsprozesses, insbesondere während eines Gießprozesses bzw. Spritzgießprozesses, mittels entsprechender Formwerkzeuge in den Grundkörper eingebracht.

Sollen nun komplexe Wasserkanäle in einem gegossenen Grundkörper realisiert werden, so kann es zu Problemen beim Entformen eines solchen Grundkörpers kommen. Beim Gießprozess eines solchen Grundkörpers werden die komplexen Wasserkanäle innerhalb des Grundkörpers regelmäßig mittels sich touchierender Schieber realisiert. Solche Schieber sind erforderlich, wenn ein Wasserkanal in Entformungsrichtung eine Hinterschneidung darstellt. Bei einer solchen Herstellung entstehen regelmäßig scharfkantige Geometrien, die sich ungünstig auf den Wasserdurchfluss und die Geräuschentwicklung innerhalb einer Sanitärarmatur auswirken.

Um die Entformbarkeit zu verbessern, sind Hinterschneidungen in Entformungsrichtung der jeweiligen Wasserkanäle bzw. Wasserwege zu vermeiden. Hierzu ist es jedoch in der Regel erforderlich, den Grundkörper in mehrere Baugruppen zu unterteilen. Nachteilig sind hierbei die zusätzlich entstehenden Dichtstellen und Verbindungsstellen, sowie ein damit einhergehender erhöhter Bauraum. Zudem sind Fertigungstoleranzen beim Zusammensetzen der einzelnen Baugruppen zu berücksichtigen.

Eine weitere Möglichkeit, Hinterschneidungen in Entformungsrichtung zu vermeiden, besteht darin, die Wasserkanäle bzw. die Wasserwege in dem Formwerkzeug parallel zu entformen. Hierbei entstehen, bezogen auf eine Trennfläche des Grundkörpers, offene Wasserkanäle, die in Betrachtungsrichtung auf die Trennfläche nicht hinterschnitten sind. Eine solche Herstellung birgt jedoch den Nachteil, dass die offenen Wasserkanäle im Anschluss an die Entformung verschlossen werden müssen. Hierzu kann bspw. ein entsprechender Deckel auf die Trennfläche aufgebracht werden. Die Fixierung eines solchen Deckels kann mittels Kleben, Verschrauben, Reibschweißen, Vibrationsschweißen oder dergleichen erfolgen. Dies hängt auch davon ab, ob der Grundkörper mit Kunststoff oder Metall gebildet ist. Ein solcher Herstellungsprozess erfolgt in der Regel mehrstufig, weil das Verschließen der offenen Kanäle der Herstellung des Grundkörpers und dem Entformen des Grundkörpers nachgelagert ist. Solche Herstellungsprozesse unterliegen Schwankungen, so dass das Ergebnis nur mit großem Aufwand prozesssicher und einheitlich im Rahmen einer Serienproduktion gewährleistet werden kann.

Insbesondere die Fixierung des Deckels birgt in der Serienproduktion einige Probleme. In der Regel wird ein einteiliger Deckel zum Verschließen aller Kanäle verwendet. Das Fixieren des Deckels ist mit den bekannten Verfahren Kleben, Verschrauben, Reibschweißen und Vibrationsschweißen relativ zeitaufwendig. Würden mehrere und insbesondere unterschiedliche Deckel Deckel verwendet, so vergrößert sich der Zeitaufwand dementsprechend. Darüber hinaus besteht das Problem, dass die Ausrichtung des Deckels in Bezug auf die offenen Wasserkanäle mit den bekannten Verfahren in der Regel nicht sehr exakt ist. Insbesondere wenn ein einteiliger Deckel zum Verschließen aller Wasserkanäle eines Grundkörpers verwendet wird, kommt es aufgrund von Fertigungstoleranzen beim Grundkörper und beim Deckel kumulativ zu Ungenauigkeiten bei der Ausrichtung.

Aus der US 2006/0059686 A1 ist schließlich noch eine Kanalausbildung bekannt, bei der der Armaturenkörper einen offenen Kanal aufweist, dessen Oberfläche poliert ist. Es wird ferner ein zugehöriger Kanaldeckel gezeigt, der ebenfalls eine polierte Oberfläche aufweist, die entsprechend der polierten Oberfläche des Kanals im Armaturenkörper ausgebildet ist. Zur Ausbildung des Kanals werden beide Teile miteinander in Verbindung gebracht. Zur Herstellung der Verbindung ist offenbart die Teile miteinander zu verschweißen, durch Zapfen oder mittels Nutführungen, wie beispielsweise Schwalbenschwanznuten, zu verbinden.

Ferner ist aus der US5579823 eine Armatur gemäß dem Oberbegriff des Patentanspruchs 1 bekannt.

Hiervon ausgehend liegt der vorliegenden Erfindung die Aufgabe zugrunde, die mit Bezug auf den Stand der Technik geschilderten Probleme zumindest teilweise zu lösen. Insbesondere soll ein Armaturenkörper für eine Sanitärarmatur angegeben werden, der einfach herzustellen ist, einen geringen Bauraum benötigt und möglichst wenig bzw. kleine Dichtstellen aufweist. Zudem sollen die Entformbarkeit erleichtert und Hinterschneidungen in Entformungsrichtung vermieden werden. Darüber hinaus soll der Verlauf der Wasserwege in dem Armaturenkörper von außen betrachtet erkennbar sein. Insbesondere soll auch ein Herstellungsverfahren für einen Armaturenkörper angegeben werden, welches ein möglichst einfaches Herstellen eines kompakten Armaturenkörpers mit möglichst wenigen bzw. kleinen Dichtstellen ermöglicht. Zudem soll eine leichte Entformbarkeit der einzelnen Komponenten ermöglicht und Hinterschneidungen vermieden werden. Zudem soll auch die Dichtigkeit der Wasserwege bei dem Armaturenkörper über einen langen Betriebszeitraum sichergestellt werden.

Diese Aufgaben werden gelöst mit einem Armaturenkörper und einem Verfahren zur Herstellung eines Armaturenkörpers mit den Merkmalen der unabhängigen Patentansprüche. Weitere vorteilhafte Ausgestaltungen der Erfindung sind in den abhängigen Patentansprüchen angege-Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierfür dient ein Armaturenkörper für eine Sanitärarmatur, der Grundkörper mit mindestens einer Aufnahme aufweist. In einem Aufnahmegrund der mindestens einen Aufnahme ist mindestens ein lateral offener Kanal vorgesehen. Der Grundkörper ist im Bereich der mindestens einen Aufnahme mit mindestens einem Deckel verbunden. Zwischen dem mindestens einen Deckel und dem mindestens einen Kanal ist mindestens ein Wasserweg gebildet. Der mindestens eine Deckel ist zumindest teilweise in der Aufnahme angeordnet. An einer Deckelaußenseite ist der mindestens eine Deckel überwiegend von einer Formmasse bedeckt.

Dies ermöglicht in vorteilhafter Weise ein schnelles, einfaches und exaktes Verschließen der lateral offenen Kanäle des Grundkörpers. Das ist insbesondere darin begründet, dass der offene Kanal in einem Aufnahmegrund einer Aufnahme vorgesehen ist und die Ausrichtung Deckels zu dem lateral offenen Kanal insbesondere durch die Führung bzw. Ausrichtungshilfe des Deckels innerhalb der Aufnahme in einfacher Weise und sehr exakt ermöglicht ist. Hinterschneidungen in Entformungsrichtung des Grundkörpers (zumindest Hinterschneidungen der offenen Kanäle) können dabei aufgrund der lateral offenen Kanäle vermieden werden. Aufgrund dessen werden insbesondere scharfe Kanten bei der Herstellung des Grundkörpers vermieden und die Kanäle können sehr strömungsgünstig erzeugt werden. Dies wirkt sich vorteilhaft auf den Wasserdurchfluss aus und ermöglicht es, die Geräuschentwicklung innerhalb des Armaturenkörpers zu minimieren. Durch diese Art der Bildung von Wasserwegen erhält man ein solides Bauteil, insbesondere Kunststoffteil, mit einer möglichst geringen Anzahl äußerer Dichtstellen, die insbesondere auch noch eine relativ kleine Dichtfläche (nur) im angrenzenden Bereich um die Wasserwege bilden. Aufgrund des Überdeckens mit der Formmasse und insbesondere des Umspritzens mit der Formmasse ist eine hohe und möglichst einfach herzustellende Dichtheit des Deckels und damit auch des Armaturenkörpers gewährleistet. Ein weiterer Vorteil der technischen Lösung ist, dass der Verlauf der Wasserwege von außen einfach zu erkennen ist, was insbesondere durch eine Formmasse begünstigt sein kann, die eine andere Farbe als die Farbe des Grundkörpers aufweist.

Ein weiterer Vorteil der technischen Lösung besteht darin, dass ein einfaches Verschließen Abdichten der einzelnen offenen Wasserkanäle möglich ist. Hier ist es auch möglich, mehrere offene Kanäle mit unterschiedlichen Deckeln einfach und schnell, insbesondere zeitgleich, mittels des Bedeckens mit Formmasse, insbesondere mittels des Umspritzens mit Formmasse, zu verschließen und abzudichten. Damit ist insbesondere eine für die Serienproduktion besonders geeignete Lösung angegeben.

Der Grundkörper ist vorzugsweise als ein Gussbauteil und bevorzugt als ein einstückiges bzw. einteiliges Gussbauteil hergestellt. Hierzu kann der Grundkörper in einem Gusswerkzeug, insbesondere einem Spritzgusswerkzeug und bevorzugt in einem Kunststoffspritzgusswerkzeug, hergestellt sein. Die lateral offenen Kanäle sind insbesondere während des Gießprozesses bzw. Spritzgießprozesses mittels entsprechender Formwerkzeuge in den Grundkörper eingebracht.

Der Grundkörper weist mindestens eine Aufnahme auf. Die Aufnahme kann in der Art einer (wenigstens teilweise umlaufend zu Kanal ausgebildeten) Vertiefung bzw. einer Ausnehmung und/oder einer Erhöhung bzw. einem Vorsprung gebildet sein. Hierbei kann der Grundkörper im Wesentlichen plattenförmig bzw. scheibenförmig gebildet sein, wobei sich die mindestens eine Vertiefung/Ausnehmung bzw. mindestens eine Erhöhung/Vorsprung von dem Grundkörper aus nach innen bzw. außen erstrecken. Der Grundkörper kann mit der Aufnahme einteilig gebildet sein. Scheibenförmig bzw. plattenförmig bedeutet hier, dass eine Ausbreitung des Grundkörpers in einer horizontalen Richtung bzw. Breite größer ist als eine Ausbreitung des Grundkörpers in einer vertikalen Richtung bzw. Höhe.

In einem Aufnahmegrund der mindestens einen Aufnahme ist mindestens ein lateral offener Kanal vorgesehen. Lateral (bzw. längs und/oder seitlich) offen bedeutet hier insbesondere, der Kanal in einer Richtung quer zu seiner Ausbreitungsrichtung innerhalb des Grundkörpers offen gestaltet ist. Dies dient dazu, Hinterschneidungen des Kanals in Entformungsrichtung des Grundkörpers zu vermeiden. Mit anderen Worten ausgedrückt bedeutet dies auch, dass die Kanäle bezogen auf eine Trennfläche bzw. Trennebene des Grundkörpers lateral offen sind und in einer Betrachtungsrichtung auf die Trennebene des Grundkörpers nicht hinterschnitten sind. Somit liegt hier insbesondere in der Trennebene des Grundkörpers eine maximale Querschnittsfläche des offenen Kanals. Der offene Kanal verläuft hierbei parallel zu dieser Trennebene bzw. Trennfläche und insbesondere entlang der Trennfläche. Der lateral offene Kanal - und insbesondere der in Betrachtungsrichtung auf die Trennebene zu erkennende und nicht hinterschnittene Querschnitt des offenen Kanals - wird beim Zusammensetzen des Armaturenkörpers mittels des Deckels bedeckt bzw. geschlossen.

Der Grundkörper ist im Bereich der mindestens einen Aufnahme mit mindestens einem Deckel verbunden. Bevorzugt ist, dass pro Wasserweg eine (einzelne) Aufnahme und entsprechend auch ein (einzelner) Deckel vorgesehen sind. Eine solche Verbindung erfolgt mittels des Bedeckens mit Formmasse. Bevorzug ist der Grundkörper in der mindestens einen Aufnahme mit dem mindestens einen Deckel verbunden. Bei einem fertig produzierten Armaturenkörper sind somit Deckel und Grundkörper miteinander verbunden.

Zwischen dem mindestens einen Deckel und dem mindestens einen Kanal ist mindestens ein Wasserweg gebildet. Dies bedeutet mit anderen Worten auch, dass der Wasserweg entlang Strömungsrichtung des Wassers (nur) mittels des Kanals und des Deckels umschlossen ist. Üblicherweise sind mehrere Wasserwege vorgesehen, die zum Beispiel Kaltwasser, Warmwasser und/oder Mischwasser durch den Armaturenkörper leiten. Der Wasserweg kann im Querschnitt kreisförmig, oval oder eckig gebildet sein. Ein Querschnitt des Wasserwegs ist hier im Wesentlichen senkrecht auf einer Strömungsrichtung bzw. Förderrichtung des Wasserwegs verstanden. Der Deckel ist hier insbesondere nicht bloß eine ebene Verschlussplatte, sondern weist bevorzugt eine gekrümmte, insbesondere rundförmige oder eckige Innenformung auf.

Der mindestens eine Deckel ist zumindest teilweise in der Aufnahme angeordnet. Bevorzugt ist der Deckel vollständig in der Aufnahme angeordnet. Dies ist jedoch nicht zwingend, weil zumindest ein Teil einer Deckelaußenseite auch nach außen (längs und/oder seitlich) über die Aufnahme bzw. die Vorsprünge hervorstehen bzw. hinausragen kann. Die Anordnung des Deckels in der Aufnahme hat den Vorteil, dass der Deckel sehr einfach und exakt zu dem lateral offenen Kanal im Aufnahmegrund der Aufnahme ausgerichtet werden kann.

Der mindestens eine Deckel kann ebenfalls als Gussbauteil hergestellt sein. Hierzu kann der Deckel in einem Gusswerkzeug, insbesondere einem Spritzgusswerkzeug und bevorzugt in einem Kunststoffspritzgusswerkzeug hergestellt sein. Dies ist jedoch nicht zwingend, weil der Deckel auch mittels anderer Fertigungsverfahren hergestellt sein kann. Der Deckel ist bevorzugt mit bzw. aus Metall oder Kunststoff gebildet. Wenn der Deckel mit Metall gebildet ist, so kann er bspw. mittels eines Tiefziehverfahrens, mittels Gesenkschmieden oder dergleichen hergestellt sein. Der mindestens eine Deckel trennt den später Wasser führenden Bereich der Kanäle, nämlich den mindestens einen Wasserweg, von dem Bereich, in dem die Formmasse angeordnet ist. Ein solcher Bereich kann bspw. eine mit Formmasse zumindest teilweise gefüllte Aufnahme sein.

Es ist bevorzugt, dass jeder Deckel einteilig gebildet ist. Es ist jedoch möglich, dass ein lateral offener Kanal mittels mehrerer Deckel nach außen geschlossen ist. Insbesondere ist somit jeder Wasserweg entlang der Strömungsrichtung des Wassers mittels des Kanals und mittels mindestens eines Deckels nach außen begrenzt bzw. umschlossen.

Der mindestens eine Deckel ist ausschließlich mittels der Formmasse mit dem Grundkörper verbunden. Ein zusätzliches Verkleben oder ein zusätzlicher Formschluss bzw. eine formschlüssige Verbindung zwischen dem mindestens einen Deckel und dem Grundkörper ist hier nicht erforderlich. Als "stoffschlüssig" werden hier Verbindungen bezeichnet, bei denen die Verbindungspartner durch atomare oder molekulare Kräfte zusammengehalten werden. Eine stoffschlüssige Verbindung kann insbesondere unter Einfluss von Wärme bspw. in der Art einer Schweißverbindung hergestellt sein. Da die Deckel mit dem Grundkörper insbesondere weder verklebt noch verschweißt sein müssen, sollte die Dichtheit zwischen Deckel und Grundkörper mittels einer möglichst exakten Anlage des Deckels bereitgestellt sein.

Die Dichtheit zwischen Deckel und Grundkörper soll verhindern, dass Formmasse während Bedeckens bzw. des Umspritzens in den Wasserweg gelangen kann. Insbesondere liegt der Deckel an einer Trennfläche des Grundkörpers an, welche beim Trennen bzw. Entformen des Grundkörpers aus dem Formwerkzeug entsteht. Die Trennfläche liegt in einer Trennebene Grundkörpers. Für die Dichtheit ist es vorteilhaft, wenn die Trennflächen entlang der Kanäle einer Ebene liegen. Es ist besonders bevorzugt, wenn alle Trennflächen eines Grundkörpers in einer gemeinsamen Ebene liegen. Dies ist jedoch nicht zwingend, weil die Trennflächen auch mehreren bzw. unterschiedlichen, insbesondere zueinander geneigten, Ebenen liegen kön-Es ist hierbei bevorzugt, dass die Ebenen mit leichten Übergängen realisiert sind. Insbesind die lateral offenen Kanäle beidseitig entlang einer Erstreckungsrichtung des Kanals mit Trennflächen umrandet. Es ist bevorzugt, dass diese Trennflächen in einer Ebene liegen, um möglichst ebenes und exaktes Anliegen eines Deckels zu gewährleisten. Dies ist vorteilhaft, der Deckel, wenn er mit der Formmasse außenseitig umspritzt werden, einem hohen Spritzdruck im Spritzgusswerkzeug, insbesondere Kunststoffspritzgusswerkzeug, standhalten muss und gegenüber der Formmasse, insbesondere einer flüssigen Kunststoffmasse, dicht sein soll.

Der mindestens eine Deckel ist an einer Deckelaußenseite überwiegend von einer Formmasse bedeckt, also insbesondere zu mindestens 70 % oder 80 %. Dabei sind insbesondere alle Grenzbereiche des Deckels und des Grundkörpers miteinander (Dichtflächen) mit erfasst. Bevorzugt ist die Deckelaußenseite (nahezu oder sogar) vollständig mit der Formmasse bedeckt. Insbesondere ist die mindestens eine Aufnahme oberhalb der Deckelaußenseite zumindest teilweise und bevorzugt vollständig mit der Formmasse gefüllt.

Nach einer vorteilhaften Ausgestaltung wird vorgeschlagen, dass die Deckelaußenseite mit Formmasse umspritzt ist. Dies bedeutet insbesondere, dass der Grundkörper und der mindestens eine Deckel, welcher zuvor in der mindestens einen Aufnahme angeordnet worden ist, in ein Spritzgusswerkzeug eingebracht werden und die Deckelaußenseite (innerhalb der Aufnahme) mittels einer flüssigen Formmasse umspritzt wird. Ein solches Umspritzen der Deckelaußenseite kann auch als ein Überspritzen insbesondere einer äußeren Oberfläche des Deckels verstanden werden. Mittels des Umspritzens kann das Bedecken mit der Formmasse in vorteilhafter Weise möglichst schnell und insbesondere in Serienreife erfolgen. Hierbei ist es z. B. auch möglich, dass mehrere Deckelaußenseiten eines Armaturenkörpers oder mehrere Deckelaußenseiten mehrerer Armaturenkörper in einem Prozessschritt, insbesondere gleichzeitig, umspritzt werden.

Nach einer weiteren vorteilhaften Ausgestaltung wird vorgeschlagen, dass zwischen der Formmasse und mindestens einer Innenwand der mindestens einen Aufnahme eine stoffschlüssige Verbindung hergestellt ist. Dies ermöglicht in vorteilhafter Weise eine einfache Verbindung zwischen Grundkörper und Deckel. Aufgrund des Stoffschlusses zwischen Formmasse und Innenwand der Aufnahme wird in vorteilhafter Weise eine besonders hohe Druckfestigkeit und Dichtheit des Armaturenkörpers nach außen erreicht.

Nach einer noch weiteren vorteilhaften Ausgestaltung wird vorgeschlagen, dass innerhalb der mindestens einen Aufnahme mindestens ein Kragen mit einer Anlagefläche für den einen Deckel gebildet ist. Der (bevorzugt den Kanal umlaufende) Kragen kann hier in der Art einer Stufe, einer (Rast-)Schulter oder dergleichen gebildet sein. Dies bedeutet insbesondere, dass die Innenwände der Aufnahme nicht direkt bzw. unmittelbar in den offenen Kanal übergehen, sondern zwischen einer Innenoberfläche des Kanals und den Innenwänden der Aufnahme ein Kragen bzw. eine Stufe vorgesehen ist. Die Anlagefläche kann hier als eine Trennfläche verstanden werden, wie sie bereits vorstehend erläutert wurde. Ein Kanal hat vorzugsweise zu beiden Seiten entlang seiner Ausbreitungsrichtung jeweils eine Anlagefläche, an denen der Deckel bzw. eine Unterseite des Deckels möglichst eben und dicht anliegen kann. Hat ein Kanal runde Abschlüsse, so kann eine Anlagefläche den Kanal umranden. Hierzu liegen die Anlageflächen bevorzugt in einer Ebene.

Nach einer weiteren vorteilhaften Ausgestaltung wird vorgeschlagen, dass zumindest der Grundkörper, der mindestens eine Deckel oder die Formmasse mit einem Kunststoff oder Silikon gebildet ist bzw. sind. Bevorzugt besteht zumindest der Grundkörper, der mindestens eine Deckel oder die Formmasse aus einem Kunststoff oder weist einen Kunststoff auf. Dies ist jedoch nicht zwingend, weil zumindest der mindestens eine Deckel oder der Grundkörper mit bzw. aus Metall gebildet sein kann bzw. sein können. Dass der Grundkörper und der (jeder) Deckel mit bzw. aus Kunststoff gebildet sind, ist besonders vorteilhaft, wenn z. B. Trinkwasser nicht in Kontakt mit Metall gelangen soll. Der Grundkörper, der mindestens eine Deckel und die Formmasse können jedoch mit bzw. aus unterschiedlichen Kunststoffen gebildet sein.

Es ist weiter bevorzugt, dass die Formmasse aus bzw. mit einem besonders festen bzw. formsteifen Kunststoff gebildet ist. Dies führt in vorteilhafter Weise dazu, dass die des Armaturenkörpers zu einem großen Teil durch die Formmasse bestimmt ist. Es ist weiter bevorzugt, dass die Formmasse derart farblich gebildet bzw. gekennzeichnet ist, dass die Wasserwege von außen betrachtet leicht zu erkennen sind.

Nach einer noch weiteren vorteilhaften Ausgestaltung wird vorgeschlagen, dass der eine Deckel außenseitig lokale Positionierungsmittel zur Ausrichtung des mindestens einen Deckels gegenüber dem mindestens einen Kanal innerhalb der mindestens einen Aufnahme aufweist. Als Positionierungsmittel können bspw. Verrastungen und/oder Verschnappungen vorgesehen sein. Als Positionierungsmittel können auch bspw. über einen Außenumfang des Deckels lokal nach außen gerichtete Auswölbungen vorgesehen sein. Die lokalen Positionierungsmittel ermöglichen es in vorteilhafter Weise, dass der Deckel passgenau innerhalb der mindestens einen Aufnahme ausgerichtet sein kann. Somit kann insbesondere ein exaktes Fluchten zwischen einem Deckel und einem durch diesen Deckel abzudeckenden Kanal erreicht werden. Aufgrund der exakten Positionierung bzw. Ausrichtung des mindestens einen Deckels in der mindestens einen Aufnahme kann eine besonders hohe Dichtheit zwischen Deckel und Kanal erreicht werden. Zudem können aufgrund der exakten Ausrichtung innerhalb der Wasserwege unnötige zusätzliche Kanten vermieden und Fertigungstoleranzen reduziert werden.

Nach einem weiteren Aspekt wird auch ein Verfahren zur Herstellung eines Armaturenkörpers für eine Sanitärarmatur vorgeschlagen, das zumindest die folgenden Schritte umfasst:
a) Bereitstellen mindestens eines Deckels und eines Grundkörpers mit mindestens einer Aufnahme, wobei in einem Aufnahmegrund der mindestens einen Aufnahme mindestens ein lateral offener Kanal vorgesehen ist,
b) Anordnen zumindest eines Teils des mindestens einen Deckels in der mindestens einen Aufnahme, wobei der mindestens eine Deckel an den Grundkörper im Bereich der mindestens einen Aufnahme angelegt wird, wobei zwischen dem mindestens einen Deckel und dem mindestens einen Kanal mindestens ein Wasserweg gebildet wird,
c) Bedecken eines überwiegenden Anteils einer Deckelaußenseite des mindestens einen Deckels mit einer Formmasse, um den Deckel und den Grundkörper miteinander zu verbinden, dadurch gekennzeichnet, dass der Deckel ausschließlich mittels der Formmasse mit dem Grundkörper verbunden ist.

Die vorangehend angedeutete Reihenfolge der Schritte ergibt sich bei der Herstellung eines Armaturenkörpers. Es ist jedoch auch möglich, mittels des beschriebenen Herstellungsverfahrens eine Vielzahl von Armaturenkörpern parallel bzw. zeitgleich herzustellen, insbesondere Rahmen einer Serienfertigung. Die Deckelaußenseite soll hierbei insbesondere nicht mit der Formmasse bedeckt werden, bevor der mindestens eine Deckel nicht in der mindestens einen Aufnahme angeordnet ist.

In Schritt a) erfolgt das Bereitstellen des mindestens einen Deckels und des Grundkörpers bevorzugt mittels jeweils eines Gussvorgangs, weiter bevorzugt mittels jeweils eines Spritzgussvorgangs und ganz besonders bevorzugt mittels jeweils eines Kunststoffspritzgussvorgangs. Insbesondere kann das Bereitstellen in Schritt a) in einem ersten Prozessschritt und insbesondere in einer ersten Werkzeugform erfolgen. Hierbei werden regelmäßig unterschiedliche und insbesondere voneinander getrennte Werkzeugformen für den mindestens einen Deckel und den Grundkörper verwendet. Wenn mindestens ein Deckel und der Grundkörper aus demselben Material bereitgestellt werden, so können diese jedoch auch in einer gemeinsamen Werkzeugform mit entsprechenden Aussparungen hergestellt werden.

In Schritt b) erfolgt das Anordnen zumindest eines Teils des mindestens einen Deckels in der mindestens einen Aufnahme insbesondere derart, dass der mindestens eine Deckel mit einer Deckelunterseite in die mindestens eine Aufnahme eingelegt wird und die Deckelunterseite an mindestens einer Trennfläche bzw. mindestens einer Anlagefläche in der Aufnahme zur Anlage kommt.

Nach einer weiteren vorteilhaften Ausgestaltung wird vorgeschlagen, dass innerhalb der mindestens einen Aufnahme mindestens ein Kragen mit einer Anlagefläche gebildet ist und wobei in Schritt b) der mindestens eine Deckel an die mindestens eine Anlagefläche angelegt wird. Ergänzend kann auf die vorangehenden Erläuterungen zu dem Kragen und zu der Anlagefläche vollumfänglich Bezug genommen werden.

Nach einer weiteren vorteilhaften Ausgestaltung wird vorgeschlagen, dass in Schritt c) die Deckelaußenseite mit der Formmasse umspritzt wird. Hierzu kann ebenfalls vollumfänglich auf die vorangehenden Erläuterungen zum Umspritzen Bezug genommen werden. Insbesondere kann das Umspritzen in Schritt c) in einem zweiten Prozessschritt und insbesondere in einer zweiten Werkzeugform durchgeführt werden.

Nach einer weiteren vorteilhaften Ausgestaltung wird vorgeschlagen, dass in Schritt c) zwischen der Formmasse und mindestens einer Innenwand der mindestens einen Aufnahme eine stoffschlüssige Verbindung hergestellt wird. Auch hier können die vorangehenden Erläuterungen zu der stoffschlüssigen Verbindung vollständig zur Präzisierung dieses Verfahrensschrittes herangezogen werden.

Die vorstehend im Zusammenhang mit dem Armaturenkörper erörterten Details, Merkmale und vorteilhaften Ausgestaltungen können entsprechend auch bei dem hier vorgestellten Herstellungsverfahren auftreten und umgekehrt. Insoweit wird auf die dortigen Ausführungen zur näheren Charakterisierung der Merkmale vollumfänglich Bezug genommen.

Die Erfindung sowie das technische Umfeld werden nachfolgend anhand der Figuren erläutert. Die Figuren zeigen Details, die die Erfindung nicht beschränken sollen. Insbesondere ist nicht anzunehmen, dass alle Details einer Figur separat nur in der dargestellten Weise ausgeprägt sein müssen oder nur in der dargestellten Kombination miteinander auftreten können. Sollte eine solche Situation vorliegen, wird hier explizit darauf hingewiesen. Es zeigen schematisch:
- Fig. 1:: eine Schnittdarstellung eines Armaturenkörpers,
- Fig. 2:: eine perspektivische Ansicht eines Grundkörpers, und
- Fig. 3:: eine perspektivische Ansicht eines Deckels.

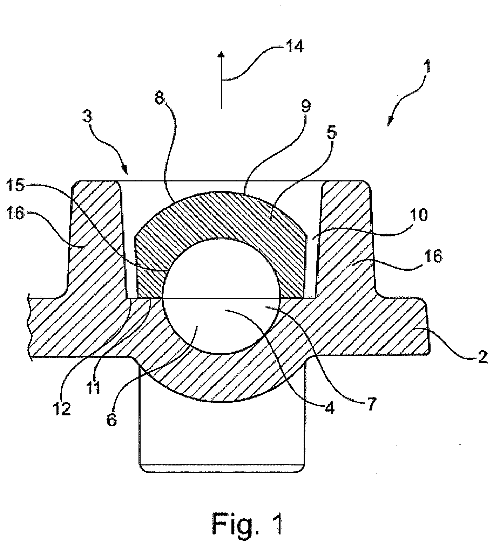

Fig. 1 zeigt einen Armaturenkörper 1 in einer Schnittdarstellung. Der Armaturenkörper 1 einen Grundkörper 2 mit einer Aufnahme 3 auf. Die Aufnahme 3 ist nach der Darstellung der Fig. 1 links und rechts jeweils mit einem Vorsprung 16 umrandet bzw. umgeben, der ggf. auch als ein einzelner umlaufend ausgebildeter Vorsprung geformt sein kann. Der Grundkörper 2 die Vorsprünge 16 sind hier als ein einteiliges Kunststoffspritzgussteil gebildet. Der Grundkörper 2 ist im Wesentlichen scheibenförmig bzw. plattenförmig ausgeführt.

In einem Aufnahmegrund 4 der Aufnahme 3 ist ein lateral offener Kanal 6 gebildet. Die Aufnahme 3 und der Kanal 6 sind in einer Entformungsrichtung 14 nicht hinterschnitten. Dadurch wird eine besonders gute Entformbarkeit des Grundkörpers gewährleistet.

Innerhalb der Aufnahme 3 sind in der Schnittdarstellung der Fig. 1 betrachtet links und rechts des offenen Kanals 6 zwei Kragen 11 mit jeweils einer Anlagefläche 12 für einen Deckel 5 gebildet, wobei der Kragen 11 ggf. auch als ein einzelner umlaufend ausgebildeter Kragen geformt sein kann. Die Anlageflächen 12 stellen jeweils eine Trennfläche dar. Beim Entformen ist eine "Trennfläche" auf die Trennung zwischen Grundkörper 2 und dem entsprechenden Formwerkzeug bezogen und im hier dargestellten Fall ist die Trennfläche die Anlagefläche bzw. Verbindungsfläche bzw. Kontaktfläche zwischen dem Grundkörper 2 und dem Deckel 5.

Aus der Darstellung nach Fig. 1 geht hervor, dass der Deckel 5 nicht als eine ebene bzw. flache Abdeckung bereitgestellt ist, sondern vielmehr eine rundförmige Deckelinnenformung 15 hat. Zwischen dem Deckel 5 und dem Kanal 6 ist ein Wasserweg 7 gebildet. Der Wasserweg 7 ist hier im Querschnitt kreisförmig.

Eine Deckelaußenseite 8 des Deckels 5 ist mit einer Formmasse 9 bedeckt. Im vorliegenden ist die Deckelaußenseite 8 mit der Formmasse 9 umspritzt worden. Zudem ist zwischen der Formmasse 9 und mindestens einer Innenwand 10 der Aufnahme 3 eine stoffschlüssige Verbindung hergestellt. In der Schnittdarstellung der Fig. 1 liegt die stoffschlüssige Verbindung links und rechts an den Innenwänden 10 vor.

Im vorliegenden Fall sind der Grundkörper 2, der Deckel 5 und die Formmasse jeweils mit aus einem Kunststoff gebildet. Es ist zu erkennen, dass der Kunststoff der Formmasse eine andere Farbe aufweist als der Kunststoff des Grundkörpers 2. Somit ist der Verlauf des Wasserwegs 7, der sich unterhalb der Formmasse 9 befindet, von außen leicht zu erkennen.

In Fig. 1 ist zudem gezeigt, dass die Aufnahme 3 oberhalb der Deckelaußenseite 8 vollständig mit der Formmasse 9 gefüllt ist, sich als in etwa bis zur Höhe der Aufnahme 3 erstreckt und den Deckel 5 vollständig überdeckt.

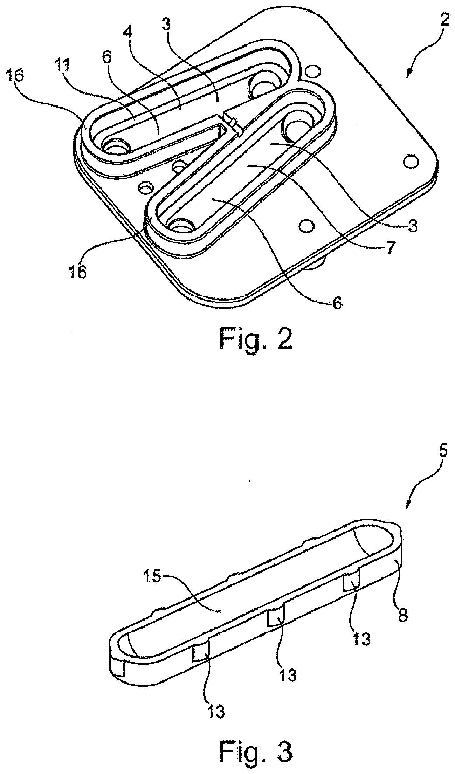

In Fig. 2 ist eine perspektivische Ansicht eines Grundkörpers 2 dargestellt. Nach der der Fig. 2 hat der Grundkörper 2 zwei Aufnahmen 3 mit jeweils einem Aufnahmegrund 4. In jedem Aufnahmegrund 4 ist ein lateral offener Kanal 6 vorgesehen. Die zwei lateral offenen Kanäle 6 können mit einem Deckel 5 zur Bildung jeweils eines Wasserwegs 7 geschlossen werden. Die zwei Aufnahmen 3 sind hier jeweils von einem Vorsprung 16 umrandet bzw. begrenzt. Zudem sind die zwei offenen Kanäle 6 jeweils von einem Kragen 11 umrandet. Die Kanäle 6 sind jeweils mit runden Abschlüssen gebildet und mittels des Kragens 11 umrandet.

Fig. 3 zeigt eine perspektivische Ansicht eines Deckels 5. Es ist zu erkennen, dass der Deckel 5 eine rundförmige Deckelinnenformung 15 hat. Zur exakten Ausrichtung des Deckels 5 einer Aufnahme 3 weist der Deckel 5 außenseitig lokale Positionierungsmittel 13 auf. Die Positionierungsmittel 13 sind jeweils in der Art einer lokalen Außenwölbung gebildet.

Damit werden ein Armaturenkörper und ein Verfahren zur Herstellung eines Armafür eine Sanitärarmatur aufgezeigt, wobei der Armaturenkörper einfach und mit möglichst wenigen Dichtstellen herzustellen ist und wobei der Verlauf der Wasserwege von außen leicht zu erkennen ist. Zudem ist der Armaturenkörper einfach und insbesondere im Rahmen einer Serienfertigung herstellbar und benötigt einen geringen Bauraum. Insbesondere ist ein Grundkörper des Armaturenkörpers gut entformbar, weil die offenen Kanäle des Grundkörpers in einer Entformungsrichtung ohne Hinterschneidungen gebildet sind.

### Bezugszeichenliste

- 1: Armaturenkörper
- 2: Grundkörper
- 3: Aufnahme
- 4: Aufnahmegrund
- 5: Deckel
- 6: Kanal
- 7: Wasserweg
- 8: Deckelaußenseite
- 9: Formmasse
- 10: Innenwand
- 11: Kragen
- 12: Anlagefläche
- 13: Positionierungsmittel
- 14: Entformungsrichtung
- 15: Deckelinnenformung
- 16: Vorsprung

## Patentansprüche

1. Armaturenkörper (1) für eine Sanitärarmatur, aufweisend einen Grundkörper (2) mit mindestens einer Aufnahme (3), wobei in einem Aufnahmegrund (4) der mindestens einen Aufnahme (3) mindestens ein lateral offener Kanal (6) vorgesehen ist, wobei der Grundkörper (2) im Bereich der mindestens einen Aufnahme (3) mit mindestens einem Deckel (5) verbunden ist, wobei zwischen dem mindestens einen Deckel (5) und dem mindestens einen Kanal (6) mindestens ein Wasserweg (7) gebildet ist, wobei der mindestens eine Deckel (5) zumindest teilweise in der Aufnahme (3) angeordnet und an einer Deckelaußenseite (8) überwiegend von einer Formmasse (9) bedeckt ist, so dass der Deckel (5) und der Grundkörper (2) miteinander verbunden sind, **dadurch gekennzeichnet, dass** der Deckel (5) ausschließlich mittels der Formmasse (9) mit dem Grundkörper (2) verbunden ist.

2. Armaturenkörper nach Patentanspruch 1, wobei die Deckelaußenseite (8) mit der Formmasse (9) umspritzt ist.

3. Armaturenkörper nach Patentanspruch 1 oder 2, wobei zwischen der Formmasse (9) und mindestens einer Innenwand (10) der mindestens einen Aufnahme (3) eine stoffschlüssige Verbindung hergestellt ist.

4. Armaturenkörper nach einem der vorhergehenden Patentansprüche, wobei innerhalb der mindestens einen Aufnahme (3) mindestens ein Kragen (11) mit einer Anlagefläche (12) für den mindestens einen Deckel (5) gebildet ist.

5. Armaturenkörper nach einem der vorhergehenden Patentansprüche, wobei zumindest der Grundkörper (2), der mindestens eine Deckel (5) oder die Formmasse (9) mit einem Kunststoff oder Silikon gebildet ist.

6. Armaturenkörper nach einem der vorhergehenden Patentansprüche, wobei der mindestens eine Deckel (5) außenseitig lokale Positionierungsmittel (13) zur Ausrichtung des mindestens einen Deckels (5) gegenüber des mindestens einen Kanals (6) innerhalb der mindestens einen Aufnahme (3) aufweist.

7. Verfahren zur Herstellung eines Armaturenkörpers (1) für eine Sanitärarmatur, umfassend zumindest die folgenden Schritte:
a) Bereitstellen mindestens eines Deckels (5) und eines Grundkörpers (2) mit mindestens einer Aufnahme (3), wobei in einem Aufnahmegrund (4) der mindestens einen Aufnahme (3) mindestens ein lateral offener Kanal (6) vorgesehen ist,
b) Anordnen zumindest eines Teils des mindestens einen Deckels (5) in der mindestens einen Aufnahme (3), wobei der mindestens eine Deckel (5) an den Grundkörper (2) im Bereich der mindestens einen Aufnahme (3) angelegt wird, wobei zwischen dem mindestens einen Deckel (5) und dem mindestens einen Kanal (6) mindestens ein Wasserweg (7) gebildet wird,
c) Bedecken eines überwiegenden Anteils einer Deckelaußenseite (8) des mindestens einen Deckels (5) mit einer Formmasse (9), um den Deckel (5) und den Grundkörper (2) miteinander zu verbinden, **dadurch gekennzeichnet, dass** der Deckel (5) ausschließlich mittels der Formmasse (9) mit dem Grundkörper (2) verbunden ist.

8. Verfahren nach Patentanspruch 7, wobei innerhalb der mindestens einen Aufnahme (3) mindestens ein Kragen (11) mit einer Anlagefläche (12) gebildet ist und wobei in Schritt b) der mindestens eine Deckel (5) an die mindestens eine Anlagefläche (12) angelegt wird.

9. Verfahren nach Patentanspruch 7 oder 8, wobei in Schritt c) die Deckelaußenseite (8) mit der Formmasse (9) umspritzt wird.

10. Verfahren nach einem der Patentansprüche 7 bis 9, wobei in Schritt c) zwischen der Formmasse (9) und mindestens einer Innenwand (10) der mindestens einen Aufnahme (3) eine stoffschlüssige Verbindung hergestellt wird.

## Claims

1. A fitting body (1) for a sanitary fitting, having a base body (2) with at least one receptacle (3), wherein at least one laterally open channel (6) is provided in a receptacle bottom (4) of the at least one receptacle (3), wherein the base body (2) is connected to at least one cover (5) in the area of the at least one receptacle (3), wherein at least one water route (7) is formed between the at least one cover (5) and the at least one channel (6), wherein the at least one cover (5) is arranged, at least partially, in the receptacle (3) and is covered by a molding compound (9) on a majority of a cover exterior (8) such that the cover (5) and the base body (2) are joined together, **characterized in that** the cover (5) is joined to the base body (2) exclusively by means of the molding compound (9).

2. The fitting body according to Claim 1, wherein the cover exterior (8) is overmolded with the molding compound (9) .

3. The fitting body according to Claim 1 or 2, wherein a substance-to-substance bond is produced between the molding compound (9) and at least one inside wall (10) of the at least one receptacle (3).

4. The fitting body according to any one of the preceding claims, wherein at least one collar (11) having a contact surface (12) for the at least one cover (5) is formed inside the at least one receptacle (3).

5. The fitting body according to any one of the preceding claims, wherein at least the base body (2), the at least one cover (5) or the molding compound (9) is formed with a plastic or silicone.

6. The fitting body according to any one of the preceding claims, wherein the at least one cover (5) has positioning means (13) localized on the outside for aligning the at least one cover (5) with respect to the at least one channel (6) inside the at least one receptacle (3).

7. A method of manufacturing a fitting body (1) for a sanitary fitting, comprising at least the following steps:
a) Providing at least one cover (5) and a base body (2) having at least one receptacle (3), wherein at least one laterally open channel (6) is provided in a receptacle bottom (4) of the at least one receptacle (3),
b) Arranging at least a part of the at least one cover (5) in the at least one receptacle (3), wherein the at least one cover (5) is applied to the base body (2) in the area of the at least one receptacle (3), wherein at least one water route (7) is formed between the at least one cover (5) and the at least one channel (6),
c) Covering a majority of a cover exterior (8) of the at least one cover (5) with a molding compound (9) in order to join the cover (5) and the base body (2) together, **characterized in that** the cover (5) is joined to the base body (2) exclusively by means of the molding compound (9).

8. The method according to Claim 7, wherein at least one collar (11) having a contact surface (12) is formed inside the at least one receptacle (3) and wherein in step b) the at least one cover (5) is applied to the at least one contact surface (12).

9. The method according to Claim 7 or 8, wherein in step c) the cover exterior (8) is overmolded with the molding compound (9).

10. The method according to any one of Claims 7 to 9, wherein in step c) a substance-to-substance bond is produced between the molding compound (9) and at least one inside wall (10) of the at least one receptacle (3) .

## Revendications

1. Corps de robinetterie (1) pour une armature sanitaire, comportant un corps de base (2) avec au moins un logement (3), sachant que dans une base de logement (4) d'au moins un logement (3) au moins un conduit (6) latéralement ouvert est prévu, sachant que le corps de base (2) est relié dans la zone d'au moins un logement (3) à au moins un couvercle (5), sachant qu'entre au moins un couvercle (5) et au moins un conduit (6) est au moins formée une voie d'eau (7), sachant qu'au moins un couvercle (5) est disposé au moins en partie dans le logement (3) et est couvert sur un côté extérieur de couvercle (8) surtout par une matière moulable (9) de telle manière que le couvercle (5) et le corps de base (2) sont reliés l'un à l'autre, ***caractérisé en ce que*** le couvercle (5) est exclusivement relié au corps de base (2) au moyen de la matière moulable (9).

2. Corps de robinetterie selon la revendication 1, sachant que le côté extérieur de couvercle (8) est enrobé par injection avec la matière moulable (9).

3. Corps de robinetterie selon la revendication 1 ou 2, sachant qu'une liaison par conformité de matière est réalisée entre la matière moulable (9) et au moins une paroi intérieure (10) d'au moins un logement (3).

4. Corps de robinetterie selon l'une quelconque des revendications précédentes, sachant qu'à l'intérieur d'au moins un logement (3) au moins un col (11) avec une surface d'appui (12) est formée pour au moins un couvercle (5).

5. Corps de robinetterie selon l'une quelconque des revendications précédentes, sachant qu'au moins le corps de base (2), au moins un couvercle (5) ou la matière moulable (9) sont formés d'une matière plastique ou de silicone.

6. Corps de robinetterie selon l'une quelconque des revendications précédentes, sachant qu'au moins un couvercle (5) comporte extérieurement des moyens de positionnement (13) locaux pour orienter au moins un couvercle (5) par rapport à au moins un conduit (6) à l'intérieur d'au moins un logement (3).

7. Procédé de fabrication d'un corps de robinetterie (1) pour une armature sanitaire, comprenant au moins les étapes suivantes :
a) préparation d'au moins un couvercle (5) et d'un corps de base (2) avec au moins un logement (3), sachant que dans une base de logement (4) d'au moins un logement (3), au moins un conduit (6) latéralement ouvert est prévu,
b) disposition d'au moins une pièce d'au moins un couvercle (5) dans au moins un logement (3), sachant qu'au moins un couvercle (5) est posé sur le corps de base (2) dans la zone d'au moins un logement (3), sachant qu'au moins une voie d'eau (7) est formée entre au moins un couvercle (5) et au moins un conduit (6),
c) couverture d'une partie prédominante d'un côté extérieur de couvercle (8) d'au moins un couvercle (5) avec une matière moulable (9) pour joindre le couvercle (5) et le corps de base (2) l'un à l'autre, ***caractérisé en ce que*** le couvercle (5) est exclusivement relié au corps de base (2) au moyen de la matière moulable (9).

8. Procédé selon la revendication 7, sachant qu'à l'intérieur d'au moins un logement (3) au moins un col (11) est formé avec une surface d'appui (12) et sachant que dans l'étape b) au moins un couvercle (5) est appuyé sur au moins une surface d'appui (12).

9. Procédé selon la revendication 7 ou 8, sachant que dans l'étape c) le côté extérieur de couvercle (8) est enrobé par injection avec la matière moulable (9).

10. Procédé selon l'une quelconque des revendications 7 à 9, sachant que dans l'étape c) une liaison par conformité de matière est réalisée entre la matière moulable (9) et au moins une paroi intérieure (10) d'au moins un logement (3).
